# EUROPEAN PATENT SPECIFICATION

(11) **EP 1 272 031 B1**
(45) Date of publication and mention of the grant of the patent: **08.06.2005**
(21) Application number: 01918099.1
(22) Date of filing: 29.03.2001
(51) Int. Cl.: A01L 5/00, A01L 7/02

(54) **A HORSESHOE ARRANGEMENT**
HUFSCHUHANORDNUNG
ENSEMBLE FER A CHEVAL

(30) Priority: 30.03.2000 SE 0001131
(43) Date of publication of application: 08.01.2003
(73) Proprietor: Nilsson, Lars Alfons, 724 70 Västeras (SE)
(72) Inventor: Nilsson, Lars Alfons, 724 70 Västeras (SE)
(74) Representative: Karlsson, Leif Karl Gunnar
(86) International application number: PCT/SE2001/000693
(87) International publication number: WO 2001/074154

(56) References cited:
- EP-A1- 0 446 562
- EP-A1- 0 832 560
- SE-C2- 503 946
- US-A- 1 953 281

## Description

### Field of invention

The present invention relates generally to a horseshoe arrangement and then more particularly to a horseshoe arrangement that consists of two parts, a hoof-proximal first part and a ground-proximal second part.

The first part has a shape typical of a horseshoe, such as a U-shape, and consists of a hard material, such as a metal material.

The second part has a corresponding horseshoe shape, which is exemplified hereinafter simply as a U-shape, consisting of a resilient material, such as a plastic material, for instance a polyurethane plastic.

The invention is based on the concept of allowing the two parts to be co-ordinated one with the other so that each hole intended for a horseshoe nail will extend straight through said two parts.

More specifically, the invention is based on the concept of allowing each hole belonging to said first part to have a cross-section that is larger than the cross-section of a hoof-penetrating nail-portion.

### Description of the background art

Several different types of horseshoe arrangements that consist of a first part and a second part are known to the art.

For instance, Swedish Patent publication SE-C2-511 451 teaches a horseshoe that includes a metal core (1) which is generally enclosed in an essentially elastically deformable material, such as a rubber or a rubber-like material.

According to this publication, the thickness of the elastically deformable material is much greater on the underside of the core (1) than at the top of the core.

Each nail-accommodating hole is arranged to extend through the two parts of the horseshoe.

The width of the ground-proximal surface on the underside of the horseshoe is narrower than the upper hoof-abutting surface throughout the full U-shaped extension of the horseshoe.

Swedish Patent Specification 21 587 and SE-C2-508 583 teach further examples of prior art horseshoe arrangements that consist of a first and a second part.

When considering the features and properties of the horseshoe arrangement according to the present invention it will be seen that a horseshoe through which nail-accommodating holes (6) extend and which comprises an elastic material (2) is known to the art from Swedish Patent Publication SE-C2-503 946.

A number of metal washers or plates (3) corresponding to the number of holes and nails are moulded in said elastic material, each of said metal plates having a limited extension.

When the horseshoe is nailed firmly to the hoof of a horse, the nails (4) extend through holes in the plates (3) and holes (6) in the U-shaped part of the horseshoe or a metal plate. It will be noted in this respect that a conical head portion of the horseshoe nail is fixed in relation to the washer and that this head portion extends through the metal plate (1).

The U-shaped hoof-abutting part of the horseshoe consists of a metal plate (1) with said elastic or resilient material (2) affixed to the underside of said plate.

The washers (3) are intended for abutment with the metal plate (1) and are movable horizontally through the effect exerted by the elastic material and relative to said material.

It is mentioned in particular that the hole (6) in the metal plate (1) has a much greater cross-sectional area than that of the hoof-penetrating part (4) of the nail, and that the nail together with the washer (3) is able to move horizontally in relation to the metal plate (1) when the hoof is subjected to load and to spring back to its original position when the load ceases.

Figures 1A and 1B of said patent publication show that the hole (6) in the metal plate (1) is much larger than the adjacent part of the nail, and that the washer or plate (3) has an extension which covers the hole in an illustrated intermediate position but that will lie in line with or pass beyond the delimiting surface of the hole (6) at each end position.

This prior patent publication teaches a horseshoe attachment which is so constructed and of such a nature that each time a horse moves and subjects its hoof to load, the hoof will be subjected to a pressure that results in a tendency for the hoof to expand slightly.

When a horse has been shod with the horseshoe attached conventionally with the aid of horseshoe nails inserted in nail-adapted holes, the horseshoe and its attachment will counteract this expansion.

According to this prior patent publication this is considered an unnatural state for the horse and that it can cause pain and therewith hamper the horse's movements.

Similar to the present invention, the prior patent publication relates to a horseshoe attachment that will enable the hoof to expand in a natural fashion.

It will also be noted that this construction comprises a first part which will include said metal plate (1) and each of said washers (3).

Other relevant patent publications in respect of the present invention are EP-A1-0 446 562, EP-A1-0 823 560 and US-A-1 953 281.

### Summary of the invention

### Technical problems

When taking into consideration the technical deliberations that a person skilled in this particular art must make in order to provide a solution to one or more technical problems that he/she encounters, it will be seen that on the one hand it is necessary initially to realise the measures and/or the sequence of measures that must be undertaken to this end, and on the other hand to realise which means is/are required in solving one or more of said problems. On this basis, it will evident that the technical problems listed below are highly relevant to the development of the present invention.

When considering the present state of the art and a horseshoe arrangement of the kind defined in the introduction it will be seen that a technical problem resides in the provision of conditions, with the aid of simple means, which enable each of the washers (3) stated in the prior patent publication SE-C2-503 948 to be eliminated while, nevertheless, providing conditions that will permit said desired expansion and said flexible attachment to be attained.

In this respect, a technical problem also resides in realising the significance of and the advantages associated with allowing each hole in the first part of the horseshoe to present or form at its hoof-distal periphery a plurality of surface sections that encircle said hole either completely or partially.

Another technical problem is one of realising the significance of and the advantages afforded by allowing said hole-encircling surface sections to be pair-wise co-ordinated diametrically with respect to said hole and adapted for sliding co-action with nail-associated support surfaces that face towards the horse's hoof.

Another technical problem is one of realising the significance of and the advantages associated with allowing said co-ordination between the first and the second part of the horseshoe to consist in fastening said second part to said first part through the medium of a moulding or casting process, so that the two parts of each horseshoe arrangement will constitute an integrated part.

Another technical problem is one of realising the significance and the advantages associated with allowing holes belonging to each first part to have a square or at least a generally square cross-sectional shape with surface sections that face or extend away from the hole or diametrically opposed therein forming two of said hole-encircling surface sections.

Another technical problem is one of realising the significance of and the advantages associated with allowing each hole associated with said first part to have further surface sections that face or extend away from the hole and that form a further two of said hole-surrounding surface sections.

Another technical problem is one of providing conditions such that two surface sections that face away from said hole will allow relative movement between a hoof-penetrating portion of a horseshoe nail and said hole in the region of a first chosen value.

Another technical problem resides in realising the significance of and the advantages associated with allowing said two further surface sections that face away in said hole to allow relative movement between a portion of a hoof-penetrating nail and said hole in the region of a second chosen value which is slightly smaller than the first value.

Yet another technical problem is one of realising the significance of and the advantages associated with allowing said relative movement in respect of said first chosen value to be directed transversely to the longitudinal extension of said first part.

Still another technical problem resides in realising the significance of and the advantages associated with allowing nail-associated support surfaces proximal to the horse's hoof to have an extension which is adapted for co-action with said away-facing surface sections in respect of a horseshoe nail that has been inserted to the end of said hole.

Another technical problem is one of realising the significance of and the advantages associated with allocating to said hole a distance between opposing de-limiting surfaces that corresponds to, or at least essentially to, twice the thickness of the hoof-penetrating portion of the nail.

A further technical problem is one of realising the significance of and the advantages associated with allowing said surface sections to be orientated at right angles to the centre axis of the hole.

It will also be seen that a technical problem resides in realising the significance of and the advantages associated with allowing said surface sections to be orientated within a central part of said first part, and for said first part to have surface portions which diverge from said surface sections towards said second part.

Another technical problem resides in realising the significance of and the advantages afforded by allowing said second part to include a ground-proximal hole that has surfaces which converge towards the ground, and by allowing the head portion of the horseshoe nail sealingly to lie in tight abutment with said convergent surfaces.

Another technical problem is one of realising the significance of and the advantages associated with allowing said divergent surface portions and said convergent surfaces to be mutually co-ordinated so as to define therebetween a hole cavity in which the horseshoe nail can move freely, at least sideways.

Yet another technical problem is one of providing a novel nail construction and design that is well adapted for use with a horseshoe arrangement of the kind defined in the introduction and which can also be used in other horseshoe arrangements, where said nail shall typically include a head portion and a hoof-penetrating portion.

Another technical problem is one of realising the significance of and the advantages associated with providing conditions in respect of said horseshoe nail that enable a widened portion to be formed between the head portion and the hoof penetrating portion of said nail.

Still another technical problem is one of realising the significance of and the advantages associated with providing said widened portion with slide surfaces that face towards said hoof penetrating portion.

A further technical problem resides in realising the significance of and the advantages afforded by allowing the slide surfaces on said widened portion to be orientated at right angles to the centre line or the longitudinal extension of said nail.

There is also a technical problem in realising the significance of and the advantages that are afforded by allowing said widened portion to have a length, which can be measured along the centre line, that corresponds to or is slightly shorter than a corresponding length of the head portion of the nail.

### Solution

Taking its starting point from a horseshoe arrangement of the kind which consists of a hoof-proximal first part and a ground-proximal second part, wherein said first part has a horseshoe shape, such as a U-shape, and consists of a hard material, such as a metal material, and said second part has a corresponding horseshoe shape and consists of an elastically resilient material, such as a plastic material.

The two parts are mutually co-ordinated so that each nail-receiving hole will extend through said two parts, and where each hole belonging to said first part has a cross-sectional size that is greater than the cross-sectional size of the hoof-penetrating portion of the nail.

With the intention of solving one or more of the aforesaid technical problems, it is proposed in accordance with the invention that each hole in the horseshoe-shaped first part includes at its hoof-distal periphery a plurality of surface sections which encircle the hole and which are diametrically related to said hole, and which are co-ordinated pair wise and adapted for sliding co-action with nail-associated support surfaces that can be turned to face the horse's hoof.

By way of proposed embodiments that lie within the scope of the inventive concept it is also proposed in accordance with the invention that said co-ordination of said first and said second parts is achieved by fastening the second part to the first part, e.g. through the medium of a special casting or moulding process, so that said two parts of the horseshoe arrangement will thereby form an integrated unit.

It is also proposed in accordance with the present invention that each hole in the first part is given a square, or generally square, cross-sectional shape with surface sections that lie extend away from the hole and that are diametrically positioned therein, such as to form two of said hole-encircling surface sections.

It is also proposed that each hole in said first part has further surface sections which extend away from the hole and form a further two of said hole encircling surface sections.

There is also proposed in accordance with the invention a special dimensioning ruling that requires the two surface sections that extend away from the hole to permit relative movement between the hoof-penetrating portion of a nail and said hole up to a first chosen value, and two second surface sections that extend away from the hole and that function to permit relative movement between the hoof-penetrating portion of a nail and said hole up to a second chosen value, said second chosen value conveniently being smaller than the first chosen value.

It is also proposed in accordance with the invention that said relative movement is essentially directed horizontally and transversely to the longitudinal extension of the first part.

It is also proposed in accordance with the invention that the horseshoe nail includes horizontal support surfaces which can be turned towards the horse's hoof and which can be given a width adapted for co-action with surface sections that face away from the hole when the nail is displaced to the end of said hole.

It is also proposed in accordance with the invention that said hole is spaced at a distance between mutually opposing delimiting surfaces that coincide with or at least essentially with twice the thickness of the hoof-penetrating portion of the nail.

It is particularly proposed that said surface section is orientated at right angles (horizontally) to the centre axis of the hole.

According to one embodiment of the invention, said surface section is orientated within a centre section of said first horseshoe part, and that said first part has surface portions that diverge from said central section towards the second horseshoe part.

The second horseshoe part shall include a ground-proximal hole that has surfaces which converge from the first horseshoe part.

A head portion of the nail shall be adapted to tightly abut a central portion of said convergent surfaces.

The invention thus proposes that said divergent surface portions and said convergent surfaces are mutually co-ordinated to define a hole cavity in which the horseshoe nail can move freely, at least sideways.

There is also provided in accordance with the invention a horseshoe nail that typically includes a head portion and a pointed hoof-penetrating portion, wherein said nail includes particularly a widened part between said portions.

According to one embodiment the widened part includes slide surfaces that face towards said hoof-penetrating portion.

In addition, the widened portion shall include side surfaces that are orientated perpendicular to the centre line of the horseshoe nail.

The widened portion has a length which can be measured along a centre line and which corresponds to or is slightly shorter than the length of the head portion.

### Advantages

Those advantages that are primarily characteristic of a horseshoe arrangement according to the present invention reside in the provision of conditions for fastening a two-part integrated horseshoe arrangement to a horse's hoof, so that the hoof is able to expand naturally, by providing the first part of each horseshoe with a hole that includes at its periphery distal from said hoof a plurality of hole-encircling surface sections which are orientated diametrically relative to said hole and which are co-ordinated pair-wise and adapted for sliding co-action with nail-associated support surfaces that can be turned to face the hoof.

There is also provided a horseshoe nail whose form is adapted to this end.

The primary characteristic features of an inventive horseshoe arrangement are set forth in the characterising clause of the accompanying claim 1.

The primary characteristic features of an inventive horseshoe nail are set forth in the characterising clause of the accompanying claim 15.

### Brief description of the drawings

A horseshoe arrangement having features characteristically significant of the present invention will now be described with reference to the accompanying drawings, in which
- Figure 1: is a side view of a horse's hoof to which an inventive horseshoe arrangement has been applied;
- Figure 2: is a perspective, sectional view of an horseshoe arrangement according to Figure 1, and shows an inserted horseshoe nail;
- Figure 3: is a corresponding perspective view of the inventive horseshoe arrangement, although with the ground-proximal elastic second part of said horseshoe omitted for reasons of clarity;
- Figure 4: is a plan view of the first part of said horseshoe arrangement, showing holes and inserted nails;
- Figure 5: is a side view of a first embodiment of an inventive horseshoe nail;
- Figure 6: is an enlarged horizontal view of the head portion of said nail;
- Figure 7: is a side view of the nail head shown in Figure 6; and
- Figure 8: is a perspective view of a second embodiment of the head portion of an inventive horseshoe nail.

### Description of embodiments at present preferred

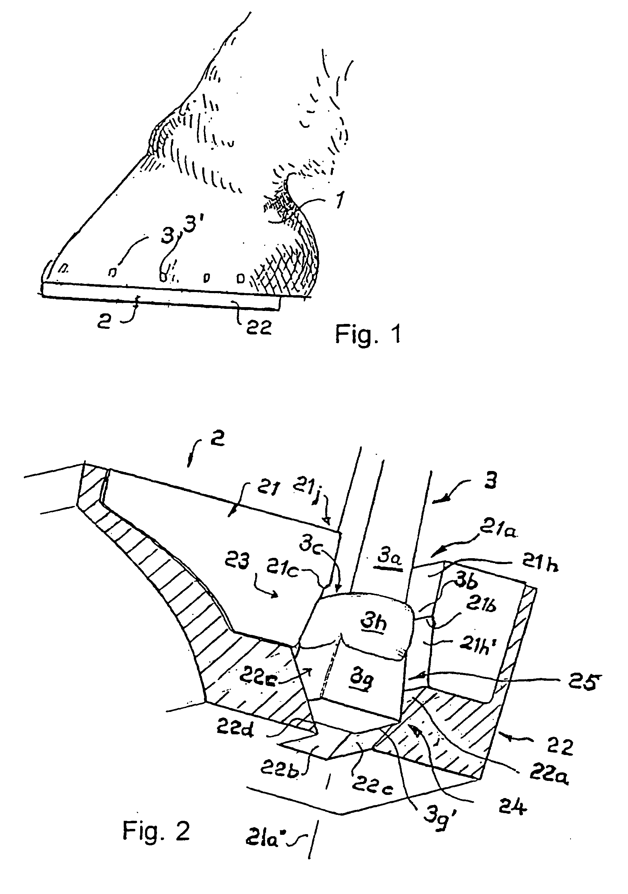

Figure 1 is a side view of a horse's hoof 1 to which there is attached a horseshoe arrangement 2 of a kind commensurate with the present invention, wherein the horseshoe arrangement 2 is fastened to the hoof in a known manner, with the aid of a number of horseshoe nails, such as the nails 3, 3'.

Figure 2 is a cross-sectional view of the horseshoe arrangement 2, which is of the kind that comprises a first part 21, which is intended to lie proximal to the horse's hoof, and a second part 22, which is intended to lie proximal to the ground.

The first part 21 has a horseshoe configuration, which is shown as a U-shape hereinafter, and consists of a hard material, such as a metal material.

The second part 22 has a corresponding horseshoe-shape or U-shape and is adapted to cover and enclose the first part 21. The second part 22 is comprised of an elastic or resilient material, such as a plastic material, preferably a polyurethane plastic.

The two parts 21, 22 are mutually co-ordinated, by virtue of the second part 22 being fastened to the first part 21 through the medium of a separate moulding or casting process.

In this respect, each nail-accommodating hole 21a, 22a is adapted to extend through said two parts 21,22.

The hole in the first part 21 is referenced 21a, whereas the hole in the second part 22 is referenced 22a.

Each hole 21a in the first part has a cross-sectional area that exceeds the cross-sectional area of the part 3a of a nail 3 that penetrates the horse's hoof.

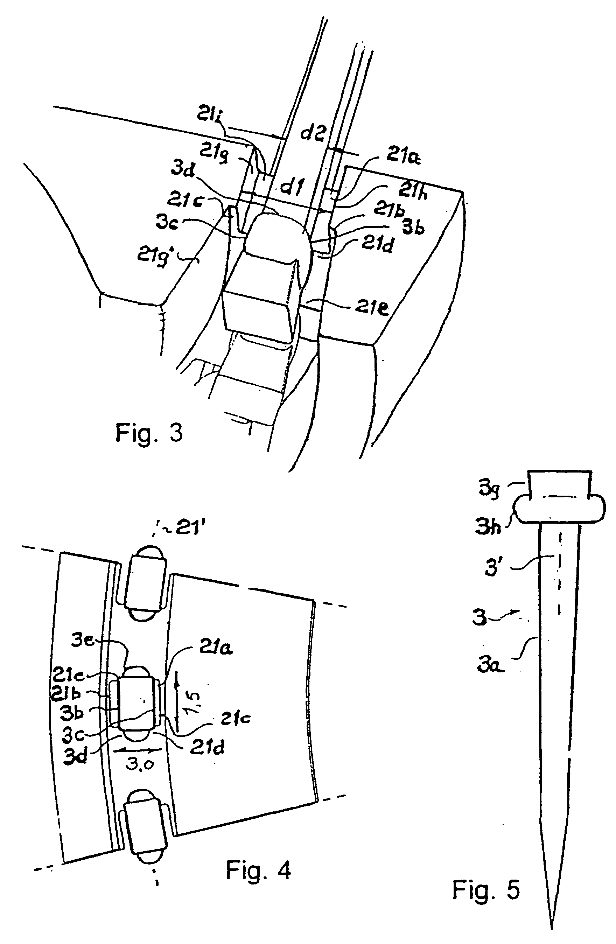

The hole 21a in the first part 21 has been given the measurement-related reference sign "d1", in order to illustrate this cross-section, whereas the hoof-penetrating part 3a of the nail has been referenced "d2" in Figure 3.

Each hole 21a in the horseshoe-shaped or U-shaped first part 21 has at its periphery distal from the horse's hoof a plurality of hole-encircling edge-formed surface sections 21b, 21c which are orientated diametrically with respect to the hole and co-ordinated pair-wise and adapted for sliding co-action with a nail-associated support surface 3b and 3c respectively that can be turned to face the horse's hoof.

The hole 21a of each first part 21 has an at least generally square cross-section with the edge-formed surface sections that face away from the hole forming said two hole-encircling surface sections 21b, 21c.

Each hole 21a of said first part 21 has further surface sections 21d, 21e that face away from the hole.

Two of the surface sections 21b, 21c that face away from the hole are adapted to permit relative movement between the hoof-penetrating nail portion 3a and said hole 21a up to a first selected value, which in the case of the Figure 4 embodiment is given as 3.0 mm. This measurement can be considered applicable to a typical horseshoe and may therefore vary slightly in respect of other horseshoe sizes.

Two other surface sections 21d, 21e that face away from the hole are adapted to permit relative movement between the hoof-penetrating nail part 3a and said hole 21a up to a second chosen value, which is given as 1.5 mm in the Figure 4 illustration. This measurement can be considered applicable to a typical horseshoe and may therefore vary slightly with horseshoes of other sizes.

This relative movement shall thus be directed primarily transversely to the longitudinal extension 21' of the first part 21.

The nail-associated support surfaces 3b, 3c and 3d, 3e proximal to the horse's hoof have an extension which is adapted for co-action with surface sections that face away from the hole when a horseshoe nail is inserted to the end of the hole 21a.

The distance "d1" between mutually opposing delimiting surfaces of the hole 21, these surfaces being referenced 21g, 21h and 21i, 21j respectively, coincides at least essentially with the distance "d2" corresponding to double the thickness of the hoof-penetrating nail part 3a.

These surface sections are orientated at right angles to the centre axis 21a' of said hole.

The four surface sections 21b, 21c, 21d and 21e are orientated within a centre part 23 of said first horseshoe part 21, and said first part 21 includes U-shaped, curved surface parts 21g', 21h' which diverge towards the second horseshoe part 22.

According to Figure 2, said second part 22 has facing towards the ground a hole 22a which includes four co-ordinated and mutually convergent surfaces 22b, 22c, 22d and 22e, this latter surface not being shown.

Each of the free edges of the connecting surface 3g' of the nail head 3g is intended to lie sealingly against a respective one of said four convergent surfaces 22b, 22c, 22d and 22e and within the centre part 24 of said nail.

The divergent surface portions 21g', 21h' and said convergent surfaces 22b, 22c, 22d and 22e are co-ordinated mutually to form a hole cavity 25 within which the nail 3 is able to move freely, at least sideways.

The hole cavity 25 shall thus fully enclosed the nail head 3g and said widened portion 3h.

The invention also relates to a horseshoe nail 3 shown in Figures 5 to 7 and described hereinafter with reference to said Figures.

The illustrated nail 3 is adapted for use with a horseshoe arrangement 2 of the earlier described nature and typically includes a head portion 3g and a hoof-penetrating pointed portion 3a.

The illustrated nail includes a widened portion 3h between said two portions 3g and 3a.

The widened portion 3h includes four slide surfaces 3b, 3c, 3d and 3e which face towards said hoof-penetrating portion 3a.

The slide surfaces on the widened portion 3h are orientated at right angles to a nail centre line 3'.

In the case of the embodiment illustrated in Figures 5, 6 and 7, the widened portion 3h has a length "a1", measurable along a centre line 3', that corresponds to or is slightly shorter than a corresponding length "a2" of the head portion 3g.

It will be understood that the invention is not limited to the aforedescribed exemplifying embodiments thereof, and that modifications can be made within the scope of the inventive concept illustrated in the accompanying claims.

It will be particularly noted that the inventive concept can be applied in all types of horseshoe arrangements, such as the illustrated and described U-shaped horseshoe arrangement or horseshoe arrangements of other open kinds, such as cross shaped shoe or of a closed kind, such as ring shaped shoe, although other types of horseshoe may be included, such as pear shaped shoe.

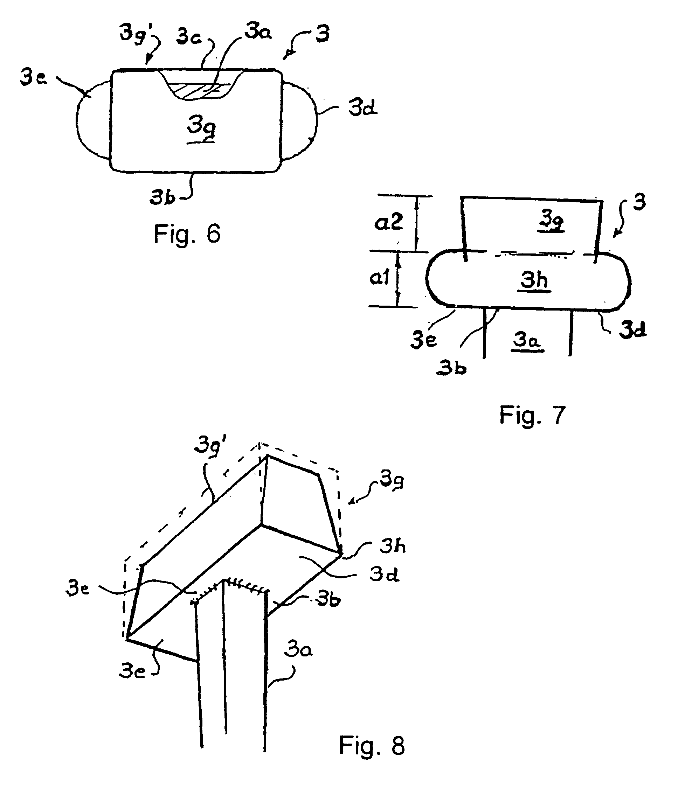

Figure 8 is a perspective view of another embodiment of the head portion 3g of a horseshoe nail.

This embodiment also includes four glide surfaces 3b, 3c, 3d and 3e that extend at right angles to the portion 3a.

The head portion 3g converges from the slide surfaces 3b, 3c, 3d and 3e (upwards in Figure 8) to present an upper surface 3g'.

The form of a right-angled parallelepiped is illustrated in broken in Figure 8. It will be evident from this that the head portion 3g has the form of a truncated pyramid with the base surface formed by the slide surfaces 3b, 3c, 3d and 3e.
Added explanations at the translation:
Cross shaped shoe = tvärtåsko: Horseshoe having a part of its front portion in the form of a crossing exposing forward oriented outer straight line.
Ring shaped shoe = ringsko: Horseshoe having an annular shape by a crossing attached to the outer portions of the shoebranches.
Pear shaped shoe = päronsko: Horseshoe having an annular shape by a crossing oriented to the intermediate portions of normal shoebranches and an extended portion backwards from said crossing and thus exposing a form essentially corresponding to the shape of a pear.

## Claims

1. A horseshoe arrangement (2) of the kind which comprises a first hoof-abutting part (21) and a second ground-abutting part (22), wherewith said first part (21) has a horseshoe configuration and consists of a hard material, such as a metal material, and said second part (22) has a corresponding horseshoe configuration and consists of a resilient material, such as a plastic material, and wherewith said two parts (21, 22) are mutually co-ordinated so that each nail-accommodating hole will (21a, 2a) extend through said two parts (21, 22), and wherewith each hole (21a, 22a) belonging to said first part (21) has a cross-sectional size that exceeds the cross-sectional size of the hoof-penetrating portion of said nall (3), **characterized in that** each hole (21a) belonging to said horseshoe-shaped first part (21) as at its periphery distal from the horse's hoof (1) a plurality of hole-encircling surface sections (21b, 21c) which are pair-wise co-ordinated and adapted for sliding co-action with nail-associated support surfaces (3b, 3c) proximal to the horse's hoof (1).

2. A horseshoe arrangement according to claim 1, **characterized in that** said second part is affixed to said first part through the medium of a moulding or casting process.

3. A horseshoe arrangement according to claim 1 or 2, **characterized in that** each hole in said first part has a square cross-sectional shape or an at least generally square cross-sectional shape, with two surface sections that face away from said hole forming two of said hole-encircling surface sections.

4. A horseshoe arrangement according to claim 3, **characterized in that** each hole in said first part has further surface sections that face away from the hole forming a further two of said hole-encircling surface sections.

5. A horseshoe arrangement according to claim 3 or claim 4, **characterized in that** the surface sections which face away from the hole function to permit relative movement between the hoof-penetrating portion of said nail and said hole up to a first chosen value.

6. A horseshoe arrangement according to claim 5, **characterized in that** two other surface sections that face away from the hole function to permit relative movement between the hoof-penetrating portion of said nail and said hole up to a second chosen value.

7. A horseshoe arrangement according to claim 5, **characterized in that** said relative movement is directed transversely to a longitudinal extension of the first part.

8. A horseshoe arrangement according to claim 1, **characterized in that** the hoof-proximal nail-associated support surfaces have an extension which is adapted for co-action with surface sections that face away from the hole when a nail has been inserted to a hole-end position.

9. A horseshoe arrangement according to claim 1, **characterized in that** the distance of the hole between mutually opposing delimiting surfaces coincides with, or at least essentially with, twice the thickness of the hoof-penetrating portion of said nail.

10. A horseshoe arrangement according to claim 1, **characterized in that** said surface sections are orientated at right angles to a centre axis of the hole.

11. A horseshoe arrangement according to claim 1, **characterized in that** said surface sections are orientated within a centre part of said first horseshoe part; and **in that** said first horseshoe part has surface portions that are divergent towards the second horseshoe part.

12. A horseshoe arrangement according to claim 1 or claim 11, **characterized in that** said second part has a ground-proximal hole that includes convergent surfaces.

13. A horseshoe arrangement according to claim 12, **characterized in that** the head portion of said nail is adapted to lie tightly against said convergent surfaces.

14. A horseshoe arrangement according to claim 1, 11 or 13, **characterized in that** said divergent surface portions and said convergent surfaces are mutually co-ordinated to form a hole cavity within which the nail can move freely, at least sideways.

15. A nail adapted for use in conjunction with a horseshoe arrangement according to any one of the preceding claims, said nail having a head portion (3g) and a hoof-penetrating portion (3a), **characterized in that** the nail (1) includes a widened portion (3h) between said two portions.

16. A nail according to claim 15, **characterized in that** said widened portions include slide surfaces that face towards said hoof-penetrating portion.

17. A nail according to claim 15 or claim 16, **characterized in that** said widened portion includes slide surfaces that are orientated at right angles to a nail centre line.

18. A nail according to claim 15, **characterized in that** said widened portion has a length which is measurable along a centre line and which corresponds to, or is slightly shorter than, the corresponding length of the head portion.

19. A nail according to one or more of claims 15, 16 and 17, **characterized in that** said widened portion has the shape of a truncated pyramid.

20. A nail according to claim 19, **characterized in that** the base surface of said pyramid consists of said slide surfaces.

## Patentansprüche

1. Eine Pferdehufanordnung (2) der Art, dass sie ein erstes hufangrenzendes Teil (21) und ein zweites bodenangrenzendes Teil (22) aufweist, wobei das erste Teil (21) eine Hufschuh-Konfiguration hat und aus einem harten Material, wie aus einem metallischen Material, besteht, und wobei das zweite Teil (22) eine entsprechende Hufschuh-Konfiguration aufweist und aus einem nachgiebigen Material, wie etwa einem Kunststoffmaterial, besteht, und wobei die beiden Teile (21, 22) miteinander zusammenwirken, so dass jedes riagelaufnehrnende Loch (21a, 22a) sich durch die beiden Teile (21,22) erstreckt und wobei jedes Loch (21a, 22a), das zu dem ersten Teil (21) gehört, eine Querschnittsgröße hat, die die Querschnittsgröße des in den Huf eindringenden Teils des Nagels (3) übersteigt, **dadurch gekennzeichnet, dass** jedes Loch (21a), das zu dem hufschuhförmigen ersten Teil (21) gehört, an seinem Umfang von dem Pferdehuf (1) entfernt eine Mehrzahl von lochumschließenden Oberflächenabschnitten (21b, 21c) aufweist, die paarweise zusammenwirken und zum gleitenden Zusammenwirken mit nagelzugehörigen Stützflächen (3b, 3c) ausgebildet sind, die proximal zu dem Pferdehuf (1) sind.

2. Eine Pferdehufanordnung nach Anspruch 1, **dadurch gekennzeichnet, dass** das zweite Teil an dem ersten Teil durch das Medium eines Formprozesses oder Gießprozesses verbunden ist.

3. Eine Pferdehufanordnung nach Anspruch 1 oder 2, **dadurch gekennzeichnet, dass** jedes Loch in dem ersten Teil eine quadratische Querschnittsform oder eine wenigstens allgemein quadratische Querschnittsform aufweist, mit zwei Oberflächenabschnitten, die von dem Loch wegweisen, das zwei der lochumschließenden Oberflächenabschnitte bildet.

4. Eine Pferdehufanordnung nach Anspruch 3, **dadurch gekennzeichnet, dass** jedes Loch in dem ersten Teil weitere Oberflächenabschnitte hat, die von dem Loch wegweisen, das weitere zwei der lochumschließenden Obertiächenabschnitte bildet.

5. Eine Pferdehufanordnung nach Anspruch 3 oder 4, **dadurch gekennzeichnet, dass** die Oberflächenabschnitte, die von dem Loch wegweisen, dazu dienen, eine Relativbewegung zwischen dem in den Huf eindringenden Abschnitt des Nagels und dem Loch bis zu einem ersten ausgewählten Wert zu erlauben.

6. Eine Pferdehufanordnung nach Anspruch 5, **dadurch gekennzeichnet, dass** zwei andere Oberftächenabschnitte, die von dem Loch wegweisen, dazu dienen, eine Relativbewegung zwischen dem in den Huf eindringenden Abschnitt des Nagels und dem Loch bis zu einem zweiten ausgewählten Wert zu ermöglichen.

7. Eine Pferdehufanordnung nach Anspruch 5, **dadurch gekennzeichnet, dass** die Relativbewegung quer zu einer Längserstreckung des ersten Teils gerichtet ist.

8. Eine Pferdehufanordnung nach Anspruch 1, **dadurch gekennzeichnet, dass** die dem Huf proximalen nagelunterstützten Stützflächen eine Ausdehnung haben, die zum Zusammenwirken mit Oberflächenabschnitten geeignet ist, die von dem Loch wegweisen, wenn ein Nagel in eine Lochendposition eingeführt wurde.

9. Eine Pferdehufanordnung nach Anspruch 1, **dadurch gekennzeichnet, dass** der Abstand des Loches zwischen einander gegenüberliegenden Begrenzungsflächen mit der zweifachen Dicke des in den Huf eindringenden Abschnittes des Nagels zusammenfällt oder wenigstens weitgehend zusammenfällt.

10. Eine Pferdehufanordnung nach Anspruch 1, **dadurch gekennzeichnet, dass** die Dberhlächenabschnitte in rechten Winkeln zu einer Mittelachse des Loches orientiert sind.

11. Eine Pferdehufanordnung nach Anspruch 1, **dadurch gekennzeichnet, dass** die Oberftächenabsehnitte innerhalb eines Mittelteils des ersten Pferdehufteils orientiert sind, und dass das erste Pferdehufteil Oberflächenabschnitte hat, die von dem zweiten Pferdehufteil aus nach außen weisen.

12. Eine Pferdehufanordnung nach Anspruch 1 oder 11, **dadurch gekennzeichnet, dass** das zweite Teil ein dem Boden nahe gelegenes Loch aufweist, das konvergierende Oberflächen einschließt.

13. Eine Pferdehufanordnung nach Anspruch 12, **dadurch gekennzeichnet, dass** der Kopfabschnitt des Nagels dazu geeignet ist, eng an den konvergierenden Oberflächen anzuliegen.

14. Eine Pferdehufanordnung nach Anspruch 1, 11 oder 13, **dadurch gekennzeichnet, dass** die divergierenden Oberflächenabschnitte und die konvergierenden Oberflächen miteinander zusammenwirken, um einen Lochhohlraum zu bilden, innerhalb dessen sich der Nagel frei bewegen kann, zumindest zur Seite hin.

15. Ein Nagel, der zur Verwendung im Zusammenhang mit einer Pferdehufanordnung nach irgendeinem der vorhergehenden Ansprüche ausgebildet ist, wobei der Nagel einen Kopfabschnitt (3g) und einen in den Huf eindringenden Abschnitt (3a) aufweist, **dadurch gekennzeichnet, dass** der Nagel (1) einen aufgeweiteten Abschnitt (3k) zwischen den beiden Abschnitten aufweist.

16. Ein Nagel nach Anspruch 15, **dadurch gekennzeichnet, dass** die aufgeweiteten Abschnitte Gleitflächen einschließen, die dem in den Huf eindringenden Abschnitt zugewandt sind.

17. Ein Nagel nach Anspruch 15 oder 16, **dadurch gekennzeichnet, dass** der aufgeweitete Abschnitt Gleitflächen aufweist, die in rechten Winkeln zu einer Nagelmittellinie orientiert sind.

18. Ein Nagel nach Anspruch 15, **dadurch gekennzeichnet, dass** der aufgeweitete Abschnitt eine Länge hat, die entlang einer Mittellinie messbar ist und die der entsprechenden Länge des Kopfabschnittes entspricht oder geringfügig kürzer ist.

19. Ein Nagel nach irgendeinem der Ansprüche 15, 16 oder 17, **dadurch gekennzeichnet, dass** der aufgeweitete Abschnitt die Form eines Pyramidenstumpfes besitzt.

20. Ein Nagel nach Anspruch 19, **dadurch gekennzeichnet, dass** die Grundfläche der Pyramide aus den Gleitflächen besteht.

## Revendications

1. Ensemble de fer à cheval (2) du type qui comprend une première partie (21) venant s'appuyer contre le sabot et une seconde partie (22) venant s'appuyer contre le sol, dans lequel ladite première partie (21) a une configuration en fer à cheval et se compose d'un matériau dur, tel qu'un matériau métallique, et ladite seconde partie (22) a une configuration en fer à cheval correspondante et se compose d'un matériau élastique, tel qu'une matière plastique, et dans lequel lesdites deux parties (21, 22) sont mutuellement coordonnées de sorte que chaque trou de réception de clou (21a, 22a) s'étend à travers lesdites deux parties (21, 22) et dans lequel chaque trou (21a, 22a) appartenant à ladite première partie (21) a une section transversale qui est supérieure à la section transversale de la partie pénétrant dans le sabot dudit clou (3), **caractérisé en ce que** chaque trou (21a) appartenant à la ladite première partie (21) en forme de fer à cheval possède, au niveau de sa périphérie distale au sabot (1) du cheval, une pluralité de sections (21b, 21c) de surface encerclant le trou qui sont coordonnées par paire et adaptées pour la coaction coulissante avec des surfaces de support (3b, 3c) associées au clou, proximales au sabot (1) du cheval.

2. Ensemble de fer à cheval selon la revendication 1, **caractérisé en ce que** ladite seconde partie est fixée sur ladite première partie par un procédé de moulage ou de coulée.

3. Ensemble de fer à cheval selon la revendication 1 ou 2, **caractérisé en ce que** chaque trou dans ladite première partie a une forme à section transversale carrée ou une forme à section transversale au moins généralement carrée, avec deux sections de surface qui se font face à distance dudit trou qui forment deux desdites sections de surface encerclant le trou.

4. Ensemble de fer à cheval selon la revendication 3, **caractérisé en ce que** chaque trou dans ladite première partie a d'autres sections de surface qui se font face à distance du trou qui forment deux autres sections de surface encerclant le trou.

5. Ensemble de fer à cheval selon la revendication 3 ou la revendication 4, **caractérisé en ce que** les sections de surface qui se font face à distance du trou, fonctionnent pour permettre le mouvement relatif entre la partie pénétrant dans le sabot dudit clou et ledit trou, jusqu'à une première valeur choisie.

6. Ensemble de fer à cheval selon la revendication 5, **caractérisé en ce que** deux autres sections de surface qui se font face à distance du trou, fonctionnent pour permettre la mouvement relatif entre la partie pénétrant dans le sabot dudit clou et ledit trou, jusqu'à une seconde valeur choisie.

7. Ensemble de fer à cheval selon la revendication 5, **caractérise en ce que** ledit mouvement relatif est dirigé de manière transversale par rapport à un prolongement longitudinal de la première partie.

8. Ensemble de fer à cheval selon la revendication 1, **caractérisé en ce que** les surfaces de support associées au clou proximales au sabot, ont un prolongement qui est adapté pour la coaction avec les sections de surface qui se font face à distance du trou, lorsqu'un clou a été inséré dans une position d'extrémité de trou.

9. Ensemble de fer à cheval selon la revendication 1, **caractérisé en ce que** la distance du trou entre les surfaces de délimitation mutuellement opposées, correspond à ou au moins essentiellement à deux fois l'épaisseur de la partie de pénétration dans le sabot dudit clou.

10. Ensemble de fer à cheval selon la revendication 1, **caractérisé en ce que** lesdites sections de surface sont orientées en angle droit par rapport à un axe central du trou.

11. Ensemble de fer à cheval selon la revendication 1, **caractérisé en ce que** lesdites sections de surface sont orientées dans une partie centrale de ladite première partie du fer à cheval ; et **en ce que** ladite première partie de fer à cheval a des parties de surface qui sont divergentes vers la seconde partie de fer à cheval.

12. Ensemble de fer à cheval selon la revendication 1 ou la revendication 11, **caractérisé en ce que** ladite seconde partie a un trou proximal au sol qui comprend des surfaces convergentes.

13. Ensemble de fer à cheval selon la revendication 12, **caractérisé en ce que** la partie de tête dudit clou est adaptée pour se tenir étroitement contre lesdites surfaces convergentes.

14. Ensemble de fer à cheval selon la revendication 1, 11 ou 13, **caractérisé en ce que** lesdites parties de surface divergente et lesdites surfaces convergentes sont mutuellement coordonnées pour former une cavité de trou à l'intérieur de laquelle le clou peut se déplacer librement, au moins latéralement.

15. Clou adapté pour être utilisé conjointement à un ensemble de fer à cheval selon l'une quelconque des revendications précédentes, ledit clou ayant une partie de tête (3g) et une partie de pénétration dans le sabot (3a), **caractérisé en ce que** le clou (1) comprend une partie élargie (3h) entre lesdites deux parties.

16. Clou selon la revendication 15, **caractérise en ce que** lesdites parties élargies comprennent des surfaces de coulissement qui font face vers ladite partie pénétrant dans le sabot.

17. Clou selon la revendication 15 ou la revendication 16, **caractérisé en ce que** ladite partie élargie comprend des surfaces de coulissement qui sont orientées en angle droit par rapport à un axe central de clou.

18. Clou selon la revendication 15, **caractérisé en ce que** ladite partie élargie a une longueur qui peut être mesurée le long d'un axe central et qui correspond à, ou est légèrement plus courte que la longueur correspondante de la partie de tête.

19. Clou selon une ou plusieurs des revendications 15, 16 et 17, **caractérisé en ce que** ladite partie élargie a la forme d'une pyramide tronquée.

20. Clou selon la revendication 19, **caractérisé en ce que** la surface de base de ladite pyramide se compose desdites surfaces de coulissement.
